# EUROPEAN PATENT APPLICATION

(11) **EP 4 807 692 A1**
(43) Date of publication of application: **16.09.2026**
(21) Application number: 25163435.8
(22) Date of filing: 13.03.2025
(51) Int. Cl.: G06V 10/774, G06V 20/56

(54) **DEVICE AND COMPUTER IMPLEMENTED METHOD FOR AUTOMATICALLY CONTROLLING THE QUALITY OF ANNOTATED DATA**

(71) Applicant: Robert Bosch GmbH, 70442 Stuttgart (DE)
(72) Inventor: Huang, Haiwen, 72074 Tübingen (DE); Zhang, Dan, 71229 Leonberg (DE)

(57) **Abstract**

A device and a computer implemented method for automatically controlling the quality of annotated data (206), in particular for training for example an image classifier, comprises providing data (202), providing the annotated data (206) with a first model (204) depending on the data (202), sampling a subset of the annotated data (206), and determining the quality (210) with a second model (208), wherein the first model (204) is configured for determining the annotated data (206) depending on the provided data (202), wherein the second model (208) is configured for determining the quality (210) depending on the subset.

## Description

### Background

The invention relates to a device and a computer-implemented method for automatically controlling the quality of annotated data, in particular for training for example an image classifier.

### Disclosure of the invention

As the large-scale multimodal models grow stronger, there is also a growing interest in utilizing these models for data annotation. However, it is challenging to ensure that the quality of the annotated data is high due to the prohibitive size of the datasets. Ensuring the quality manually requires defining annotation guidelines. These guidelines are defined before the data itself is available. As data is collected from an open world, there is inevitable to encounter cases where data does not fall in the scope of given annotation guidelines. This is addressed by a quality control step. The quality control step may be in addition to an existing automated labelling or annotation step. The quality control step addresses the issue that there exists no perfect pre-specified labeling criteria. A quality drop in the quality determined in the quality control step informs the user whenever the annotation fails to meet the specific criteria.

For instance, the annotation guidelines comprise a list of classes to annotate and the annotation comprises a likelihood for the classes in the list of classes. The quality of the annotation indicating the classes ambiguously is less than the quality for an annotation indicating one class.

For instance, a model for annotating the data can do open vocabulary annotations, i.e., free form annotations. The quality control step checks, if the fee form annotations are correct. This avoids annotations that are based on a hallucination of the model for annotating.

A computer implemented method for automatically controlling the quality of annotated data, in particular for training for example an image classifier comprises providing data, providing the annotated data with a first model depending on the data, sampling a subset of the annotated data, and determining the quality with a second model, wherein the first model is configured for determining the annotated data depending on the provided data, wherein the second model is configured for determining the quality depending on the subset.. The method provides quality control for automatic data annotation without requiring manual labor. The method easily scales as the dataset sizes of the provided data grows.

The method may comprise training on the annotated data.

Training on the annotated data may comprise training the image classifier on the annotated data, wherein the annotated data comprises annotated digital images. The image classifier is configured for image classification. The image classification may comprise single label classification, multilabel classification, object detection, semantic segmentation, or instance segmentation.

The method may comprise using the image classifier for environment detection of an at least partially autonomous vehicle.

The method according to claim 2, characterized that the training on the annotated data comprises training a classifier on the subset and the quality determined with the second model for the subset to output the quality of the subset of the annotated data.

The method may comprise determining the quality of at least a part of the provided annotated data with the classifier, and selecting the annotated data for that the determined quality exceeds a threshold.

The method may comprise training the first model depending on the quality determined with the second model.

The first model may be an open-source multimodal model, and/or in that, the second model is a closed-source multimodal model.

The first model may be configured for generating multimodal annotations of digital images, for example a mask and name associated with the digital images respectively.

The method according to one of the preceding claims, characterized in that the second model is configured for generating a score for the quality of the annotation of the annotated data respectively.

The method according to one of the preceding claims, characterized in that the annotated data comprises at least one data point that is annotated with different annotations, wherein the second model is configured for generating a preference ranking among the different annotations for the data point.

A device for automatically controlling the quality of annotated data, wherein the device comprises at least one processor and at least one memory storing instructions that, when executed by the at least one processor, cause the device to execute the method.

A computer program for automatically controlling the quality of annotated data, wherein the computer program comprises instructions that, when executed by a computer, cause the computer to execute the method.

Further examples are derivable from the following description and the drawing. In the drawing:
Fig. 1 schematically depicts a device for automatically controlling the quality of annotated data,
Fig. 2 schematically depicts an exemplary architecture of the device,
Fig. 3 depicts a flowchart with steps of a method for automatically controlling the quality of annotated data,
Fig. 4 schematically depicts a vehicle.

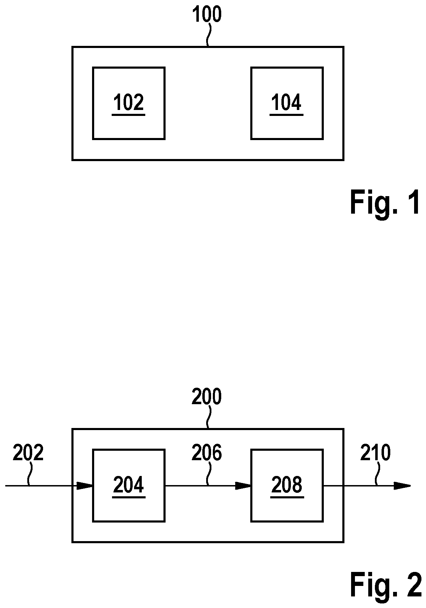

Figure 1 schematically depicts a device 100.

The device 100 comprises at least one processor 102 and at least one memory 104. The at least one memory 104 stores instructions.

Figure 2 depicts an exemplary architecture 200 of the device 100.

According to the exemplary architecture 200, data 202 is mapped by a first model 204 to annotated data 206. At least a subset of the annotated data 206 is mapped by a second model 208 to the quality 210 of the annotated data 206.

The data 202 may comprise digital images.

The first model 204 is configured for determining the annotated data 206 depending on the data 202. The first model 204 is for example an open source model. LlaVA is an example for the open source model. LlaVA is described for example in Liu, Haotian, et al. "Visual instruction tuning." Advances in neural information processing systems 36 (2024).

The first model 204 may be configured for generating multimodal annotations of digital images, for example a mask and name associated with the digital images respectively.

The second model 208 is configured for determining the quality 210 depending on the annotated data 206 or the subset thereof. The second model 208 is for example a closed source model. GPT4-V and Gemini-Pro are examples for the closed source model GPT4-V is for example described in Achiam, Josh, et al. "Gpt-4 technical report." arXiv preprint arXiv:2303.08774 (2023). Gemini-Pro is for example described in Team, Gemini, et al. "Gemini: a family of highly capable multimodal models." arXiv preprint arXiv:2312.11805 (2023).

The second model 208 may be configured for generating a score for the quality 210 of the annotation of the annotated data 206 respectively.

The annotated data 206 may comprises at least one data point that is annotated with different annotations. The second model 208 may be configured for generating a preference ranking among the different annotations for the data point.

The instructions that the at least one memory 104 stores, when executed by the at least one processor 102, cause the device 100 to execute a method for automatically controlling the quality of annotated data 206.

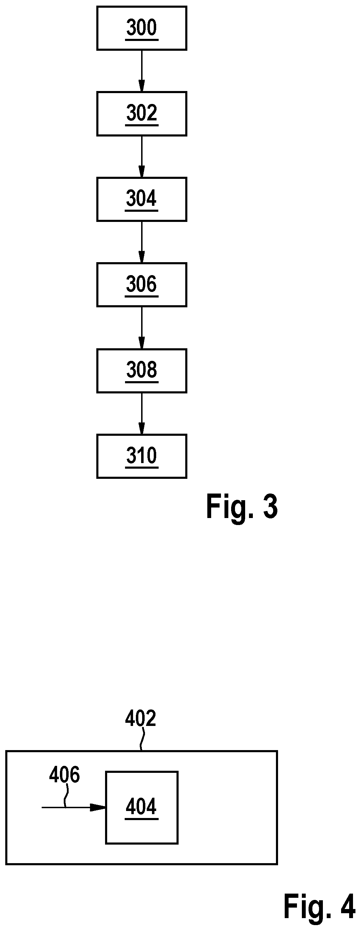

Figure 3 depicts a flowchart comprising steps of the method.

The method comprises a step 300.

The step 300 comprises providing the data 202.

The data 202 may comprise digital images.

The method comprises a step 302.

The step 302 comprises providing the annotated data 206 with the first model 204 depending on the data 202.

For example, the open-source multimodal model, e.g., LlaVA, is used to generate multimodal annotations in the digital images in the annotated data 206. The multimodal annotation of one digital image for example comprises masks and names on the digital image.

For example, a prompt requesting the multimodal annotation and the output of the annotated data 206 is determined and sent to the first model 204, e.g., the open-source multimodal model. The prompt may comprise an indication of the modes that the multimodal annotations shall comprise. Exemplary modes are masks or names associated with the data point that is annotated.

For image classification, the modes may comprise single label classification, multilabel classification, object detection, semantic segmentation, or instance segmentation.

For the annotated data 206 that comprises at least one data point that is annotated with different annotations, the preference ranking among the different annotations for the data point may be generated.

For the data comprising digital images, the annotated data 206 may comprise annotated digital images. The first model 204 is for example configured for mapping an input of the first model 204 comprising one of the digital images from the data 202 to an output of the first model 204 comprising the annotated digital image. The annotated digital image for example comprises the digital image and an annotation for the digital image to that the first model 204 maps the digital image.

The method comprises a step 304.

The step 304 comprises sampling the subset of the annotated data 206.

For example, the subset of the annotated data 206 comprising the multimodal annotations is sampled.

The method comprises a step 306.

The step 306 comprises determining the quality 210 with the second model 208.

The second model 208 is for example the closed-source multimodal model, e.g., GPT4-V or Gemini-Pro.

For example, a prompt for the second model 208 is determined to ask for feedback of the second model 208 on the quality 210. The subset of the annotated data 206 and the quality 210 may be provided to the second model 208 together with the prompt to request the feedback. The prompt may indicate the form of the feedback. Exemplary forms of the feedback are a score of the quality 210 of the annotation, a score for the quality 210 of the annotations, or a preference ranking among multiple different annotations for the same data point. One way to check the quality 210 is: based on the annotation in the annotated data 206 generated by the first model 204 for a data point, a set of questions is created with simple form answers. A simple form answer comprises for example yes or no, or a selection from given choices. If the answer of the second model 208 to the set of questions is consistent with the annotation in the annotated data 206 generated by the first model 204, this is considered a positive sign for high quality annotation. Otherwise, this is considered as a sign of low quality.

The method may comprise a step 308.

The step 308 comprises training on the annotated data 206.

The training on the annotated data 206 may comprise training a classifier on the subset and the quality 210 determined with the second model 208 for the subset. The classifier is for example trained to output the quality 210 of the subset of the annotated data 206.

The method may further comprise determining the quality 210 of at least a part of the provided annotated data 206 with the classifier. The method may further comprise selecting the annotated data 206 for that the determined quality 210 exceeds a threshold. For example, the classifier is trained as quality scoring model that can be used to rank the annotations from the first model 204, e.g., the open-source multimodal model. For example, the threshold is chosen to keep only the high-quality annotations.

For example, the feedback is used to directly improve the open-source multimodal model on the feedback, to obtain an improved open-source multimodal model that can rank the quality of the annotations. For example, for feedback in the forms of data quality scores, a regression network is used that is configured for taking in visual and text embeddings from a pretrained CLIP model. An example for the CLIP model is described in Radford, Alec, et al. "Learning transferable visual models from natural language supervision." International conference on machine learning. PMLR, 2021.

For example, the regression network is trained to score the quality of the data points.

As another example to use the feedback, the feedback may be used as context of the prompt to the open-source multimodal model.

The method may further comprise using the quality 210 as feedback to improve the first model 204, e.g., the open-source multimodal model. This means the training may comprise training the first model 204 depending on the quality 210 determined with the second model 208.

The method may further comprise using the improved first model 204, e.g., the open-source multimodal model, to annotate the data 202 again to obtain higher quality annotations.

The training on the annotated data 206 for example comprises training an image classifier on the annotated data 206, wherein the annotated data 206 comprises the annotated digital images.

The method may comprise a step 310.

The step 310 comprises using the image classifier for environment detection of an at least partially autonomous vehicle.

Figure 4 schematically depicts an exemplary at least partially autonomous vehicle 402.

The vehicle 402 comprises an exemplary image classifier 404. The image classifier 404 is for example trained with the method.

The vehicle 402 is configured for providing at least one digital image 406 to the image classifier 404 for the environment detection.

## Claims

1. A computer implemented method for automatically controlling the quality of annotated data (206), in particular for training for example an image classifier (404), comprises providing (300) data (202), providing (302) the annotated data (206) with a first model (204) depending on the data (202), sampling (304) a subset of the annotated data (206), and determining (306) the quality (210) with a second model (208), wherein the first model (204) is configured for determining the annotated data (206) depending on the provided data (202), wherein the second model (208) is configured for determining the quality (210) depending on the subset.

2. The method according to claim 1, **characterized in that** the method comprises training (308) on the annotated data (206).

3. The method according to claim 2, characterized that the training (308) on the annotated data (206) comprises training the image classifier (404) on the annotated data (206), wherein the annotated data (206) comprises annotated digital images.

4. The method according to claim 3, **characterized in that** the method comprises using (310) the image classifier (404) for environment detection of an at least partially autonomous vehicle (402).

5. The method according to claim 2, characterized that the training (308) on the annotated data (206) comprises training (308) a classifier on the subset and the quality (210) determined with the second model (208) for the subset to output the quality (210) of the subset of the annotated data (206).

6. The method according to claim 5, **characterized in that** the method comprises determining the quality (210) of at least a part of the provided annotated data (206) with the classifier, and selecting the annotated data (206) for that the determined quality (210) exceeds a threshold.

7. The method according to one of the preceding claims, **characterized in that** the method comprises training (308) the first model (204) depending on the quality (210) determined with the second model (208).

8. The method according to one of the preceding claims, **characterized in that** the first model (204) is an open-source multimodal model, and/or **in that** the second model (208) is a closed-source multimodal model.

9. The method according to one of the preceding claims, **characterized in that** the first model (204) is configured for generating multimodal annotations of digital images, for example a mask and name associated with the digital images respectively.

10. The method according to one of the preceding claims, **characterized in that** the second model (208) is configured for generating a score for the quality (210) of the annotation of the annotated data (206) respectively.

11. The method according to one of the preceding claims, **characterized in that** the annotated data (206) comprises at least one data point that is annotated with different annotations, wherein the second model (208) is configured for generating a preference ranking among the different annotations for the data point.

12. A device (100) for automatically controlling the quality (210) of annotated data (206), **characterized in that** the device (100) comprises at least one processor (102) and at least one memory (104) storing instructions that, when executed by the at least one processor (102), cause the device (100) to execute the method according to one of the claims 1 to 11.

13. A computer program for automatically controlling the quality (210) of annotated data (206), **characterized in that** the computer program comprises instructions that, when executed by a computer, cause the computer to execute the method according to one of the claims 1 to 11.
